# EUROPEAN PATENT APPLICATION

(11) **EP 4 703 417 A1**
(43) Date of publication of application: **04.03.2026**
(21) Application number: 24207896.2
(22) Date of filing: 21.10.2024
(51) Int. Cl.: C08K 3/22, C08L 77/02, A44B 1/02, A44B 11/00, A44B 19/26, B29D 19/00, B65D 33/25

(54) **POLYAMIDE 6 COMPOSITION AND AN ARTICLE PREPARED THEREFROM**

(30) Priority: 27.08.2024 US 202418816984
(71) Applicant: Duraflex Hong Kong Limited, Central, Sheung Wan, Hong Kong (HK)
(72) Inventor: LEUNG, Hing Lun, Tsuen Wan (HK); LEUNG, Pui Kwan, Tsuen Wan (HK); LAU, Kam Ming, Tsuen Wan (HK); FUNG, Kai Kwun, Tsuen Wan (HK)
(74) Representative: P&TS SA (AG, Ltd.)

(57) **Abstract**

The present invention relates to a composition for injection molding, comprising Polyamide 6; and an inorganic nucleation agent. The present invention also provides an injection molded accessory, such as a button, a zipper puller, a buckle, a cord lock, a cord end, and a stopper, comprising the composition. The present invention also provides a method for preparing an article, such as an accessory, comprising injection molding of the composition.

## Description

### FIELD OF THE INVENTION

The present invention relates to a composition for injection molding comprising Polyamide 6, an injection molded accessory comprising the composition, and a method for preparing an article from the composition.

### BACKGROUND OF THE INVENTION

Patents IN202417015412A and WO2024105472A2 disclosed recycled nylon. Commercialized recycled polyamide 6 materials in the market usually have inconsistent colors, because they are from mechanical recycling without eliminating impurities in the waste yarn. Pure chemically recycled PA6 directly from waste yarn is colorable, but has a low crystallinity (<5%) that causes mold sticking, low strength, sink mark, and other cosmetic problems, and thus is not suitable for injection molding.

There is a need for a Polyamide 6 composition suitable for injection molding. There is also a need to use recycled yarn made of polyamide 6 (RPA6) to produce apparel trims or accessories so that all the components of the apparel are made of waste RPA6 yarn. Then the whole used apparel can be melted directly to produce a new apparel product again, without dissasembling the trims or accessories first before melting, to achieve better sustainability (mono-material concept). The possible apparel accessories include a button, a zipper puller, a buckle, a cord lock, a cord end, a stopper, etc.

### SUMMARY

The objective of the invention is to provide a Polyamide 6 composition suitable for injection molding. It is desired that the composition has improved injection molding smoothness.

A further objective of the invention is to provide an injection molded accessory selected from the group consisting of a button, a zipper puller, a buckle, a cord lock, a cord end, and a stopper, such as for a backpack or apparel, comprising PA6, without glass fiber, mineral fiber, or any other rigid fiber. It is desired that the accessory has an acceptable or improved tensile strength.

The present disclosure provides a composition for injection molding, comprising Polyamide 6 (PA 6); and an inorganic nucleation agent.

The present disclosure provides an injection molded accessory, such as a button, a zipper puller, a buckle, a cord lock, a cord end, and a stopper, comprising the composition of the disclosure.

The present disclosure also provides a method for preparing an article, such as an accessory, comprising injection molding of the composition of the disclosure.

The composition is suitable for injection molding. The composition has satisfactory injection molding smoothness. It is not necessary to add glass fibers, mineral fibers, or any other rigid fibers in the composition for injection molding. Accordingly, the composition is suitable for mono-material recycling loop, in which the apparel made of waste yarn and the trims or accessories of the composition can be melted together to produce a new apparel product again, without dissasembling the trims or accessories first before melting. The composition is also colorable to produce colorful trims or accessories. The trims or accessories made of the composition have acceptable or improved tensile strength.

### DETAILED DESCRIPTION

In one aspect, the present invention relates to a composition for injection molding, comprising Polyamide 6 (PA 6); and an inorganic nucleation agent.

The composition may comprise Polyamide 6 (PA 6) in a content of greater than 80%, greater than 90%, or greater than 95%, by weight on the basis of the total weight of the composition.

The composition may comprise an inorganic nucleation agent in a content of 0.3-1.5 phr (parts per hundred parts of resin), 0.3-1 phr, or 0.5-1 phr.

The term "phr" means parts per hundred parts of resin, i.e., parts per hundred parts of PA 6, calculated on the weight basis.

The nucleation agent may improve the injection molding smoothness of the composition.

The composition comprising the nucleation agent may provide an injection molded accessory, such as a buckle or zipper puller, with improved tensile strength as compared with a corresponding composition without the nucleation agent.

Preferably, the inorganic nucleation agent is Y₂O₃. Y₂O₃ does not turn yellow at a high temperature, such as about 260 degree C.

In one aspect, the composition further comprises a mould release.

In one aspect, the composition comprises a mould release in a content of 0.5-2.5 phr, or 1-2 phr.

Preferably, the mould release is a wax, for example a polyolefin based wax, such as a polyethylene wax (e.g. LDPE-wax, HDPE-wax, or oxidized PE-wax), a polypropylene wax, or their mixture.

The mould release may further improve the injection molding smoothness of the composition.

In one aspect, the composition further comprises a plasticizer.

The composition may comprise a plasticizer in a content of 1-10 phr, 2-8 phr, or 2-6 phr.

Preferably, the plasticizer is polyethylene glycol (PEG) or polypropylene glycol, such as polyethylene glycol with a molecular weight from 400 to 8000.

The plasticizer may further improve the injection molding smoothness of the composition.

In one aspect, the composition further comprises a primary antioxidant.

The composition may comprise a primary antioxidant in a content of 0-1 phr, 0-0.5 phr, or 0-0.2 phr.

Preferably, the primary antioxidant may be a hindered phenol or secondary aromatic amine, such as pentaerythritol tetrakis[3-[3,5-di-tert-butyl-4-hydroxyphenyl]propionate, octadecyl-3-[3,5-di-tert-butyl-4-hydroxyphenyl]propionate], 3,3',3',5,5',5'-hexa-tert-butyl-a,a',a'-(mesitylene-2,4,6-triyl)tri-p-cresol, calcium-bis (((3,5-bis(1,1-dimethylethyl)-4-hydroxyphenyl)methyl)-ethylphosphonate), bis (oxyethylene) bis-(3-(5-tert-butyl-4-hydroxy-m-tolyl)-propionate), 3,5-bis (1,1-dimethyl-ethyl)-4-hydroxy-C7-C9 branched alkyl esters, N,N'-(Hexane-1,6-diyl)bis[3-(3,5-di-tert-butyl-4-hydroxyphenyl)propanamide] (Antioxidant1098), or their mixture.

In one aspect, the composition further comprises a secondary antioxidant.

The composition may comprise a secondary antioxidant in a content of 0-1 phr, 0-0.5 phr, or 0-0.2 phr.

Preferably, the secondary antioxidant may be a phosphorus compound, such as tris(2,4-ditert-butylphenyl)phosphite, Bis(2.4-di-t-butylphenyl) Pentaerythritol Diphosphite, Tris(dipropyleneglycol) phosphite, Calcium bis[monoethyl(3,5-di-tert-butyl-4-hydroxylbenzyl)phosphonate], or their mixture.

In one aspect, the Polyamide 6 is recycled Polyamide 6 from chemical recycling or biochemical recycling of waste nylon yarn.

For the chemical recycling process, it may mainly include the following steps:

Cleaning the pre-consumer PA6 scrap from waste fabric (such yarns with colorant);

Depolymerization of the scrap to small oligomer or monomer of PA6 (caprolactam) by different kinds of methods (see for example https://www.cetjournal.it/cet/23/100/122.pdf);

Separation of the small oligomer or monomer of PA6 and colorants, or other additives in the fabrics; and

Polymerization of the oligomer or monomer of the PA6 to PA6 molecules.

The unmodified chemically recycled PA6 polymer may have melt flow index of < 20 g/ 10min, under 230 degree C, 2.16kg loading.

The composition may be obtained by mixing all the components.

In one aspect, the present invention relates to an injection molded accessory, such as a button, a zipper puller, a buckle, a cord lock, a cord end, and a stopper, preferably for a backpack or apparel, comprising the composition.

Preferably, the accessory does not comprise glass fiber, mineral fiber, or any other rigid fiber. Accordingly, the composition is suitable for mono-material recycling loop, in which the apparel made of waste yarn and the trims or accessories of the composition can be melted together to produce a new apparel product again, without dissasembling the trims or accessories first before melting.

In one aspect, the present invention relates to a method for preparing an article, such as an accessory, e.g. a button, a zipper puller, a buckle, a cord lock, a cord end, and a stopper, comprising injection molding of the composition.

Preferably, the method comprises injection molding of the composition with a cycle time within 30 seconds.

### Examples

### Materials

PA6 is chemically recycled Polyamide 6.

Virgin PA6 means those commercialized PA6 in the market, such as BASF Ultramid B3S, which usually contains not only molecule of PA6 itself, but also different kinds of additives, such as heat stabilizers, mold release, etc.

Unmodified chemically recycled PA6 means 100% PA6 molecule itself without adding any additives. It is purely 100% PA6 obtained by chemical recycling.

Anti-MS-oxidized wax is an oxidized PE wax.

LCP is a liquid crystal polymer.

Irganox^{®} 1010 by BASF is pentaerythritol tetrakis[3-[3,5-di-tert-butyl-4-hydroxyphenyl]propionate.

Irgafos^{®} 168 by BASF is tris(2,4-di-tert.-butylphenyl) phosphite.

Irganox^{®} 1098 by BASF is a N,N'-hexane-1,6-diylbis(3-(3,5-di-tert-butyl-4-hydroxyphenylpropionamide)).

### Preparation of the compositions

For each example, the composition was prepared by mixing all the components.

### Test procedure

The virgin PA6, the unmodified chemically recycled PA6, and the compositions are used in injection molding for producing buckles or zipper pullers.

Smoothness is observed in an injection molding process to see if mold sticking happens and if a molded part, such as a buckle or zipper puller, can be smoothly ejected.

The tensile strength is tested for a buckle or zipper puller under a pulling speed at 300mm/min, at room temperature. The buckle or zipper puller is pulled untill it breaks or separates.

The compositions and test results are shown in Table 1.

**Table 1**

| **Exam ple** | | **PA6 %** | **Mould Release** | | **phr** | **Strength Enhance** | **phr** | **Nucleati on Agent** | **phr** | **Plastic izer** |
|---|---|---|---|---|---|---|---|---|---|---|
| | **Virgin PA6** | | | | | | | | | |
| | **Unmodifie d chemically Recycled PA6** | **100** | | | | | | | | |
| **1** | **compositio n** | **99.8** | | | | | | **NA-Y₂O₃** | **0.3** | |
| **2** | **compositio n** | **99.5** | | | | | | **NA-Y₂O₃** | **0.5** | |
| **3** | **compositio n0** | **98.8** | **Anti-MS-oxidized wax** | **1** | | | | **NA-Y₂O₃** | **0.3** | |
| **4** | **compositio n** | **98** | **Anti-MS-oxidized wax** | **1** | | | | **NA-Y₂O₃** | **1** | |
| **5** | **compositio n** | **97.6** | **Anti-MS-oxidized wax** | **1.5** | | | | **NA-Y₂O₃** | **1** | |
| **6** | **compositio n** | **97.6** | **Anti-MS-oxidized wax** | **2** | | | | **NA-Y₂O₃** | **1** | |
| **7** | **compositio n** | **95.3** | **Anti-MS-oxidized wax** | **1.5** | **LCP** | | **2** | **NA-Y₂O₃** | **1** | |
| **8** | **compositio n** | **91.3** | **Anti-MS-oxidized wax** | **1.5** | | | | **NA-Y₂O₃** | **1** | **PEG80 00** |
| **9** | **compositio n** | **91.3** | **Anti-MS-oxidized wax** | **1.5** | | | | **NA-Y₂O₃** | **1** | **PEG80 00** |

| **Exa mple** | **phr** | **Heat Stabiliz er** | **phr** | **Heat Stabili zer** | **phr** | **Injectio n Moldin g Smoot hness** | **Tensile Strength in Buckle (Industri al Standard >50kg)** | **Tensile Strength Increme nt in Buckle** | **Tensile Strength in Zipper Puller (Industrial Standard> 12g)** | **Tensile Strength Increme nt in zipper puller** |
|---|---|---|---|---|---|---|---|---|---|---|
| | | | | | | **Smoot h** | **102.2** | | **20.1** | |
| | | | | | | **Serious Mold Stickin g** | **88.6** | | **9.2** | |
| **1** | | | | | | **Slightly Mold Stickin g** | **120.6** | **36.1%** | **14.4** | **56.5%** |
| **2** | | | | | | **Slightly Mold Stickin g** | **120.41** | **35.9%** | **15.1** | **64.1%** |
| **3** | | | | | | **Smoot h** | **97.3** | **9.8%** | **15.5** | **68.5%** |
| **4** | | | | | | **Smoot h** | **110** | **24.2%** | **22.3** | **142.4%** |
| **5** | | | | | | **Smoot h** | **102.7** | **15.9%** | **15.8** | **71.7%** |
| **6** | | **Irganox ^{®} 1010** | **0.2** | **Irgafo s^{®} 168** | **0.2** | **Smoot h** | **105.4** | **19.0%** | **15.2** | **65.2%** |
| **7** | | **Irganox ^{®} 1098** | **0.2** | | | **Smoot h** | **95.8** | **8.1%** | **13.0** | **41.3%** |
| **8** | **2%** | **Irganox ^{®} 1098** | **0.2** | | | **Very Smoot h** | **97.8** | **10.4%** | **15.1** | **64.1%** |
| **9** | **6** | **Irganox ^{®} 1098** | **0.2** | | | **Very Smoot h** | **83.5** | **-5.8%** | **16.0** | **73.9%** |

The unmodified chemically recycled PA6 had a serious mold sticking problem in injection molding. The industrial standard is >50kg for tensile strength in buckles, and >12g for tensile strength in zipper pullers. The zipper puller made of the unmodified chemically recycled PA6 did not meet the industrial standard for tensile strength.

For examples 1-9, Y₂O₃ did not turn yellow at a high temperature, such as about 260 degree C.

With the nucleation agent, Examples 1 and 2 were only slightly mold sticking, and exhibited significantly improved tensile strength in both buckles and zipper pullers, as compared with the unmodified chemically recycled PA6.

Examples 3-7 further comprised an anti-ms-oxidized wax, and were smooth in injection molding, which was advantageous over Examples 1 and 2.

Examples 8 and 9 further comprising PEG8000 exhibited further improved injection molding smoothness over Examples 3-7.

All Examples 1-9 met the industrial standard for tensile strength in buckles and zipper pullers.

In Example 7, LCP (liquid crystal polymer) was incorporated into the composition to make the composition whiter.

Although the present invention is described with reference to the preferred embodiments, it is understood that various modifications are possible within the spirit or scope of the present invention.

## Claims

1. A composition for injection molding, comprising
Polyamide 6 (PA 6), preferably in a content of greater than 90% by weight on the basis of the total weight of the composition; and
an inorganic nucleation agent, preferably Y₂O₃, preferably in a content of 0.3-1 phr (parts per hundred parts of resin).

2. The composition according to claim 1, further comprising a mould release, preferably a wax, more preferably a polyolefin based wax, such as a polyethylene wax (e.g. LDPE-wax, HDPE-wax, or oxidized PE-wax), a polypropylene wax, or their mixture, preferably in a content of 1-2 phr.

3. The composition according to claim 1, further comprising a plasticizer, preferably polyethylene glycol (PEG) or polypropylene glycol, such as polyethylene glycol with a molecular weight from 400 to 8000, preferably in a content of 2-6 phr.

4. The composition according to claim 1, further comprising a primary antioxidant, preferably a hindered phenol or secondary aromatic amine, such as pentaerythritol tetrakis[3-[3,5-di-tert-butyl-4-hydroxyphenyl]propionate, octadecyl-3-[3,5-di-tert-butyl-4-hydroxyphenyl]propionate], 3,3',3',5,5',5'-hexa-tert-butyl-a,a',a'-(mesitylene-2,4,6-triyl)tri-p-cresol, calcium-bis (((3,5-bis(1,1-dimethylethyl)-4-hydroxyphenyl)methyl)-ethylphosphonate), bis (oxyethylene) bis-(3-(5-tert-butyl-4-hydroxy-m-tolyl)-propionate), 3,5-bis (1,1-dimethyl-ethyl)-4-hydroxy-C7-C9 branched alkyl esters, N,N'-(Hexane-1,6-diyl)bis[3-(3,5-di-tert-butyl-4-hydroxyphenyl)propanamide] (Antioxidant1098), or their mixture, preferably in a content of 0-0.2 phr.

5. The composition according to claim 4, further comprising a secondary antioxidant, preferably a phosphorus compound, such as tris(2,4-ditert-butylphenyl)phosphite, Bis(2.4-di-t-butylphenyl) Pentaerythritol Diphosphite, Tris(dipropyleneglycol) phosphite, Calcium bis[monoethyl(3,5-di-tert-butyl-4-hydroxylbenzyl)phosphonate], or their mixture, preferably in a content of 0-0.2 phr.

6. The composition according to claim 1, wherein the Polyamide 6 is recycled Polyamide 6 from chemical recycling or biochemical recycling of waste nylon yarn.

7. An injection molded accessory selected from the group consisting of a button, a zipper puller, a buckle, a cord lock, a cord end, and a stopper, preferably for a backpack or apparel, comprising the composition according to claim 1, preferably without glass fiber, mineral fiber, or any other rigid fiber.

8. A method for preparing an article, such as an accessory selected from the group consisting of a button, a zipper puller, a buckle, a cord lock, a cord end, and a stopper, comprising injection molding of the composition according to claim 1, preferably with a cycle time within 30 seconds.
